# EUROPÄISCHE PATENTANMELDUNG

(11) **EP 2 048 597 A1**
(43) Veröffentlichungstag der Anmeldung: **15.04.2009**
(21) Anmeldenummer: 07019843.7
(22) Anmeldetag: 10.10.2007
(51) Int. Cl.: G06K 9/00, G06K 9/46

(54) **Verfahren zur Objekterfassung**

(71) Anmelder: Delphi Technologies, Inc., Troy, Michigan 48007 (US)
(72) Erfinder: Nunn, Christian, 42499 Hückeswagen (DE); Müller-Schneiders, Stefan, 40597 Düsseldorf (DE)
(74) Vertreter: Manitz, Finsterwald & Partner GbR

(57) **Zusammenfassung**

Es wird ein Verfahren zur Detektion eines Objektes mit einer eine bestimmte Dicke aufweisenden kreisförmigen oder die Form eines regelmäßigen Polygons besitzenden Umrandung in der Umgebung im Sichtbereich eines an einem Träger wie insbesondere einem Fahrzeug angebrachten optischen Sensors angegeben, wobei eine jeweilige kreisförmige Umrandung eine kreisförmige Außenkante und eine kreisförmige Innenkante besitzt und eine jeweilige die Form eines regelmäßigen Polygons besitzende Umrandung eine Außenkante und eine Innenkante besitzt, die Ecken aufweisen, die unter gleichem Zentriwinkel auf einem Außenkreis bzw. Innenkreis liegen. Dabei werden mittels des optischen Sensors in zeitlich aufeinanderfolgenden Schritten Bilder aufgenommen. Anhand der aufgenommenen Bilder wird durch eine Bildverarbeitung auf der Basis einer Kantendetektion unter Heranziehung des bekannten Verhältnisses zwischen dem Radius der kreisförmigen Außenkante und dem Radius der kreisförmigen Innenkante der kreisförmigen Umrandung bzw. unter Heranziehung des Verhältnisses zwischen dem Radius des durch die Ecken der Außenkante verlaufenden Außenkreises und dem Radius des durch die Ecken der Innenkante verlaufenden Innenkreises in einem integrierten Verfahrensschritt die die beiden jeweiligen konzentrischen Kreise umfassende doppelte Kreiskantenstruktur erfasst.

## Beschreibung

Die Erfindung betrifft ein Verfahren zur Detektion eines Objektes mit einer eine bestimmte Dicke aufweisenden kreisförmigen oder die Form eines regelmäßigen Polygons besitzenden Umrandung in der Umgebung im Sichtbereich eines an einem Träger wie insbesondere einem Fahrzeug angebrachten optischen Sensors.

Systeme zur Verkehrszeichenerkennung können dazu verwendet werden, den Fahrer eines Kraftfahrzeuges über die Verkehrszeichen an der Fahrbahn zu informieren, beispielsweise durch Projektion einer graphischen Repräsentation eines an der Fahrbahn detektierten Verkehrszeichens über ein Head-Up-Display auf die Frontscheibe des Kraftfahrzeuges. Systeme zur Verkehrszeichenerkennung können jedoch auch als Fahrerassistenzsysteme eingesetzt werden, beispielsweise um bei einer Geschwindigkeitsübertretung die Fahrgeschwindigkeit automatisch auf die zulässige Höchstgeschwindigkeit zu reduzieren.

Für die Verkehrszeichenerkennung werden Kameras eingesetzt, die die Umgebung vor dem Kraftfahrzeug aufnehmen und auf das Vorhandensein von Verkehrszeichen hin untersuchen.

Es sind insbesondere auch bereits Systeme zur Erfassung kreisförmiger europäischer Verkehrszeichen wie besondere Geschwindigkeitsbegrenzungszeichen anhand der aufgenommenen Bildfolgen bekannt. Europäische Geschwindigkeitsbegrenzungszeichen bestehen aus einer schwarzen Zahl auf einer weißen kreisförmigen Tafel, die mit einer dicken roten Umrandung versehen ist. Systeme, die in der Lage sind, derartige kreisförmige Strukturen zu erfassen, werden beispielsweise in den folgenden Veröffentlichungen beschrieben:
G. LOY and A. Zelinsky: "A fast radial symmetry for detection points of interest", IEEE Transactions on Pattern Recognition Analysis and Machine Intelligence, Vol. 25, No. 8, August 2003;
Hough: "Methods and Means for Recognizing Complex Pattern"; US 3069654 (1962).

Dabei wird in der Regel nur eine bestimmte Randstruktur erfasst. Möglich wäre auch eine sequenzielle Erfassung der die Umrandung begrenzenden inneren und äußeren kreisförmigen Kanten.

Es sind auch bereits Systeme zur Erfassung von die Form eines regelmäßigen oder regulären Polygons besitzenden Verkehrszeichen bekannt. Bei einem regelmäßigen Polygon handelt es sich um ein Vieleck, dessen Ecken gleichabständig, also unter gleichem Zentriwinkel, auf einem Kreis liegen. Dazu zählen beispielsweise dreieckige Verkehrszeichen mit rotem Rand usw. Ein System, das in der Lage ist, derartige, die Form eines regelmäßigen Polygons aufweisende Strukturen zu erfassen, werden beispielsweise in der folgenden Veröffentlichung beschrieben:
G. LOY and N. BARNES: "Fast Shape-based Road Sign Detection for a Driver Assistance System"; G. LOY: Computer Vision and Active Perception Laboratory, Royal Institute of Technology (KTH), Stockholm, Sweden; N. BARNES: Autonomous Systems and Sensor Technologies Program, National ICT Australia, Canberra, Australia.

Die bisherigen Systeme und Verfahren zur Verkehrszeichenerkennung, welche von einer Datenverarbeitungseinrichtung ausgeführt wird, erfordern einen relativ hohen Rechenaufwand, der eine entsprechend hohe Rechenzeit mit sich bringt. Darüber hinaus ist die Robustheit der betreffenden Verkehrszeichenerkennung unzureichend.

Der Erfindung liegt die Aufgabe zugrunde, eine Möglichkeit anzugeben, den Rechenaufwand bei einer Erkennung von Objekten mit einer eine bestimmte Dicke aufweisenden kreisförmigen oder die Form eines regelmäßigen Polygons besitzenden Umrandungen zu verkürzen und/oder die Robustheit einer derartigen Erkennung zu erhöhen.

Gemäß der Erfindung wird diese Aufgabe gelöst durch ein Verfahren zur Detektion eines Objektes mit einer eine bestimmte Dicke aufweisenden kreisförmigen oder die Form eines regelmäßigen Polygons besitzenden Umrandung in der Umgebung im Sichtbereich eines an einem Träger wie insbesondere einem Fahrzeug angebrachten optischen Sensors, wobei eine jeweilige kreisförmige Umrandung eine kreisförmige Außenkante und eine kreisförmige Innenkante besitzt und eine jeweilige die Form eines regelmäßigen Polygons besitzende Umrandung eine Außenkante und eine Innenkante besitzt, die Ecken aufweisen, die unter gleichem Zentriwinkel auf einem Außenkreis bzw. Innenkreis liegen, bei dem mittels des optischen Sensors in zeitlich aufeinander folgenden Schritten Bilder aufgenommen werden und anhand der aufgenommenen Bildfolge durch eine Bildverarbeitung auf der Basis einer Kantendetektion unter Heranziehung des bekannten Verhältnisses zwischen dem Radius der kreisförmigen Außenkante und dem Radius der kreisförmigen Innenkante der kreisförmigen Umrandung bzw. unter Heranziehung des Verhältnisses zwischen dem Radius des durch die Ecken der Außenkante verlaufenden Außenkreises und dem Radius des durch die Ecken der Innenkante verlaufenden Innenkreises in einem integrierten Verfahrensschritt die die beiden jeweiligen konzentrischen Kreise umfassende doppelte Kreiskantenstruktur erfasst wird.

Aufgrund dieser Ausgestaltung können die betreffenden, eine kreisförmige Umrandung bzw. eine Umrandung in der Form eines regelmäßigen Polygons bestimmter Dicke aufweisenden Objekte bei deutlich reduziertem Rechenaufwand und entsprechend verringerter Rechenzeit mit hoher Robustheit erkannt werden. Dabei ist das Verfahren beispielsweise zur Erkennung von kreisförmigen oder die Form eines regelmäßigen Polygons besitzenden Verkehrszeichen gut geeignet. Es können jedoch auch beliebige andere Objekte mit einer doppelten kreisförmigen Struktur bzw. einer doppelten gleichmäßigen Polygonstruktur erfasst werden. So ist das Verfahren beispielsweise auch zur Erfassung von Rädern an Fahrzeugen oder Motorrädern, Schildern für einen Kameraabgleich, eine automatische Crash-Test-Analyse und/oder dergleichen geeignet.

Als optischer Sensor wird bevorzugt eine Graustufen-Kamera verwendet.

Die Kantendetektion kann beispielsweise mittels eines Sobel-Operators oder dergleichen durchgeführt werden.

Eine bevorzugte praktische Ausgestaltung des erfindungsgemäßen Verfahrens zeichnet sich dadurch aus, dass zur Erfassung der doppelten Kreiskantenstruktur für jedes Pixel eines jeweiligen aufgenommenen Bildes ein zweifaches Annahmeschema herangezogen wird, das sowohl eine Annahme bezüglich des Radius der kreisförmigen Außenkante bzw. bezüglich des Radius des durch die Ecken der'Außenkante verlaufenden Außenkreises als auch eine Arinahme bezüglich des Radius der kreisförmigen Innenkante der kreisförmigen Umrandung bzw, bezüglich des Radius des durch die Ecken der Innenkante verlaufenden Innenkreises umfasst, und ein diese Annahmen enthaltendes Bild erzeugt wird.

Vorteilhafterweise wird dabei zur Erfassung des Zentrums der doppelten Kreiskantenstruktur insbesondere auf der Basis des bekannten Verhältnisses zwischen den beiden Kreisradien eine Schwelle bestimmt. Über eine solche Schwelle kann dann beispielsweise festgelegt werden, ob eine jeweilige doppelte Kreiskantenstruktur hinreichend plausibel ist oder nicht.

Von Vorteil ist insbesondere auch, wenn in einem vorangehenden Verfahrensschritt zunächst nur eine relativ gröbere Erfassung von einzelnen kreisförmigen bzw. die Form eines regelmäßigen Polygons besitzenden Strukturen bei geringerer Auflösung erfolgt und anschließend unter Heranziehung der Ergebnisse des vorangehenden Verfahrensschrittes der relativ genauere integrierte Verfahrensschritt zur Erfassung der doppelten Kreiskantenstruktur insbesondere mit relativ höherer Auflösung durchgeführt wird.

Nach dem vorangehenden Verfahrensschritt und vor dem integrierten Verfahrensschritt zur Erfassung der doppelten Kreiskantenstruktur können zweckmäßigerweise mittels eines Verfolgers durch Rauschen und/oder nicht zu erfassende Strukturen verursachte Artefakte ausgefiltert werden.

Unter Heranziehung unterschiedlicher bekannter Verhältnisse zwischen den Radien kann zwischen unterschiedlichen Objekten, das heißt insbesondere zwischen Objekten mit unterschiedlich dicker Umrandung, unterschieden werden.

Gegenstand der Erfindung ist zudem ein Computerprogramm mit Programmcode-Mitteln, um das vorstehend beschriebene Verfahren durchzuführen, wenn das Programm auf einem Computer oder einer entsprechenden Recheneinheit ausgeführt wird.

Gegenstand der Erfindung ist auch ein Computerprogrammprodukt mit Programmcode-Mitteln, die auf einem computerlesbaren Datenträger gespeichert sind, um das vorstehend beschriebene Verfahren durchzuführen, wenn das Computerprogramm auf einem Computer oder einer entsprechenden Recheneinheit ausgeführt wird.

Unter einem Computer ist eine beliebige Datenverarbeitungsvorrichtung zu verstehen, mit der das Verfahren ausgeführt werden kann. Dabei kann eine solche Datenverarbeitungsvorrichtung insbesondere digitale Signalprozessoren und/oder Mikroprozessoren umfassen, mit denen das Verfahren ganz oder in Teilen ausgeführt wird.

Schließlich ist Gegenstand der Erfindung auch eine Vorrichtung zur Detektion eines Objektes mit einer eine bestimmte Dicke aufweisenden kreisförmigen oder die Form eines regelmäßigen Polygons besitzenden Umrandung in der Umgebung im Sichtbereich eines an einem Träger wie insbesondere einem Fahrzeug angebrachten optischen Sensors, mit einer Datenverarbeitungsanlage, die zur Durchführung des vorstehend beschriebenen Verfahrens ausgebildet ist.

Die Erfindung ist also beispielsweise zur Erfassung kreisförmiger oder die Form eines regelmäßigen Polygons besitzenden europäischer Verkehrszeichen wie insbesondere Geschwindigkeitsbegrenzungszeichen oder mehreckiger, z.B.dreieckiger Verkehrszeichen in Bildfolgen geeignet. Europäische Geschwindigkeitsbegrenzungszeichen bestehen aus einer schwarzen Zahl auf einer weißen Tafel mit einer dicken roten Umrandung. Es existieren z.B. auch dreieckige Verkehrszeichen mit rotem Rand. Erfindungsgemäß erfolgt eine gleichzeitige Erfassung zweier kreisförmiger oder zweier die Form eines regelmäßigen Polygons besitzender Kantenstrukturen. Dabei wird ein jeweiliger Doppelkreis in einem integrierten Verfahrensschritt erfasst. Hierbei wird der Umstand genutzt, dass das Verhältnis der Radien der beiden Kreise bekannt ist, und es wird dieses bekannte Verhältnis bei der Bildverarbeitung mit herangezogen. Indem die beiden kreisförmigen bzw. die beiden die Form eines regelmäßigen Polygons besitzenden Strukturen in einem einzigen Verfahrensschritt erfasst werden, wird sowohl der Rechenaufwand reduziert als auch die Robustheit des gesamten Erfassungssystems erhöht.

Da Graustufen-Videokameras nach wie vor eine Reihe von Vorteilen wie beispielsweise eine relativ große Nachtempfindlichkeit aufweisen, wird bevorzugt eine Graustufen-Kamera, zum Beispiel eine Graustufen-Videokamera verwendet.

Bei der Erzeugung von Kantenbildern beispielsweise mittels des Sobel-Operators erscheinen z.B. europäische kreisförmige Verkehrszeichen gewöhnlich als doppelte Kreisstrukturen mit einem festen Verhältnis zwischen dem inneren und dem äußeren Radius. Die doppelte Kreisstruktur ergibt sich beispielsweise aus einer auf die dicke rote Umrandung solcher Zeichen angewandten Kantendetektion.

Ein zuverlässiger Ansatz zur Erfassung kreisförmiger Strukturen bekannter Größe wurde bereits mit der sogenannten "Fast Radial Symmetry Transform" von Loy u.a. vorgeschlagen. Die Grundidee dieses Algorithmus basiert auf einem Annahmeschema, bei dem für jedes Pixel in dem Bild unter Heranziehung eines bekannten Kreisradius Annahmen bezüglich einer möglichen Kreismitte getroffen werden. Dabei wird bei einem solchen Annahmeschema zunächst der Sobel-Operator auf das Bild angewandt und anschließend der normalisierte Gradient mit dem bekannten Radius multipliziert. Dies resultiert in der Lokalisation einer neuen Position in dem Bild entsprechend der angenommenen Kreismitte, wobei ein Akkumulator zur Bekräftigung der Annahme entsprechend erhöht wird. Dieser Ansatz ist in G. LOY and A. Zelinsky: "A fast radial symmetry for detection points of interest", IEEE Transactions on Pattern Recognition Analysis and Machine Intelligence, Vol. 25, No. 8, August 2003, näher beschrieben.

Ein auf regelmäßige Polygone verallgemeinerter Ansatz ist in dem zuvor bereits genannten Aufsatz G. LOY and N. BARNES: "Fast Shape-based Road Sign Detection for a Driver Assistance System" angegeben.

Erfindungsgemäß werden nun diese bekannten Ansätze auf die Erfassung von doppelten Kreisen mit einem bestimmten Verhältnis zwischen den Radien des inneren und des äußeren Kreises einer jeweiligen kreisförmigen Umrandung bzw. zwischen den Radien der die Ecken der Außenkante und die Ecken der Innenkante einer jeweiligen die Form eines gleichmäßigen Polygons aufweisenden Umrandung enthaltenden inneren und äußeren Kreise erweitert. Dabei kann zur gleichzeitigen Erfassung der beiden Kreise die Annahme beispielsweise wie folgt durchgeführt werden:

Für jedes Pixel in dem Bild können zwei Annahmen getroffen werden, nämlich eine bezüglich des Radius des inneren Kreises und eine zweite bezüglich des Radius des äußeren Kreises. Dieses doppelte Annahmeschema führt zur Anhäufung einer großen Anzahl von Annahmen in der Mitte der doppelten Kreisstruktur. Auf der Basis dieser Kenntnis kann eine Schwelle auf das die Annahmen enthaltende Bild angewandt und dadurch die Mitte der Struktur erfasst werden.

Unter Heranziehung unterschiedlicher bekannter Verhältnisse zwischen den Kreisradien kann auch zwischen unterschiedlichen Objekten unterschieden werden. So können einerseits beispielsweise auf Aluminiumtafeln gedruckte statische Zeichen und andererseits sogenannte dynamische Zeichen auf der Basis einer LED-Technologie erfasst werden. Dabei unterscheidet sich die zur Erfassung der Zeichen herangezogene doppelte Kreisstruktur. So kann das Verhältnis zwischen dem Innen- und Außenkreis für statische Zeichen beispielsweise bei 0,7 liegen, während es für dynamische Zeichen bei 0,85 liegt.

Einer der entscheidenden Vorteile des oben erwähnten bekannten Ansatzes für einzelne Kreise besteht darin, dass die Gradientenrichtung auf effiziente Weise mit herangezogen werden kann. So kann bei im Voraus bekannter Gradientenrichtung diese wirksam zur Erfassung der interessierenden kreisförmigen Struktur herangezogen werden. Im Rahmen der Erfindung, bei der ein doppelter Kreis zu erfassen ist, kommt dies in noch größerem Ausmaß zum Tragen. So besitzen statische Zeichen eine definierte Gradientenrichtung von Hell zu Dunkel, während bei dynamischen Zeichen eine Gradientenrichtung von Dunkel zu Hell vorliegt, was im Rahmen des verwendeten Annahmeschema-Algorithmus zweckmäßig genutzt werden kann.

Die erfindungsgemäße Erfassung von doppelten kreisförmigen oder doppelten die Form eines regelmäßigen Polygons besitzenden Strukturen ist genau und robust. Während die bekannten Ansätze einen großen Rechenaufwand mit sich bringen, kann erfindungsgemäß dieses Problem beispielsweise durch das folgende zweistufige Herangehen beseitigt werden:

Es erfolgt in einem ersten Verfahrensschritt nur eine grobe Erfassung einzelner kreisförmiger bzw. einzelner die Form eines regelmäßigen Polygons besitzenden Strukturen. Bevorzugt kann dieser Schritt beispielsweise für ein mit geringerer Abtastrate abgetastetes Bild bei halber Auflösung, zum Beispiel 50 % Breite und 50 % Höhe, erfolgen. Dieser erste Schritt stellt auf einfache Weise sicher, dass alle relevanten Strukturen aufgefunden und grob lokalisiert werden. In dem zweiten Schritt werden die Ergebnisse des ersten Verfahrensschrittes dann als Eingangsgrößen verwendet, und an den Stellen, an denen die Kreise aufgefunden wurden, wird dann der präzisere, die doppelte Kreiserfassung betreffende Verfahrensschritt bei voller Auflösung durchgeführt. Da die aufzusuchenden Radien zumindest grob durch den ersten Schritt geschätzt wurden, erfolgt die Suche mit dem zweiten Verfahrens- oder Bearbeitungsschritt mit einer geringeren Anzahl von Radien. Wird beispielsweise mit dem ersten Schritt ein Kreis mit einem Radius "6" bei einer bestimmten Position in dem Bild erfasst, so ist es beispielsweise zweckmäßig, den zweiten Schritt mit möglichen Radien "5", "6" und "7" durchzuführen. Dieser zweistufige Ansatz gewährleistet die Echtzeit-Fähigkeit des Erfassungsansatzes und bringt darüber hinaus eine genauere Lokalisation mit sich. Diese hohe Präzision bezüglich der Lokalisation und Größe der Zeichen ermöglicht eine zuverlässige Durchführung der folgenden Schritte und insgesamt die Verwirklichung eines robusten Erkennungssystems.

Der Rechenaufwand kann beispielsweise dadurch weiter reduziert werden, dass nach der ersten groben Erfassung mittels eines Verfolgers durch Rauschen und nicht zu erfassende Zeichen verursachte Artefakte oder Störungen ausgefiltert werden. In diesem Fall muss die zweite Stufe nur auf Zeichenkandidaten angewandt werden, die zeitlich stabil sind und ein plausibles Bewegungsmuster aufweisen.

Wie bereits erwähnt, ist die Erfindung nicht auf eine Anwendung bei Verkehrszeichen beschränkt. Es ist eine Verwendung für beliebige andere eine doppelte Kreisstruktur bzw. eine doppelte regelmäßige Polygonstruktur aufweisende Objekte denkbar.

Die Erfindung wird im Folgenden anhand von Ausführungsbeispielen unter Bezugnahme auf die Zeichnung näher erläutert; in dieser zeigen:
- Fig. 1: eine Darstellung eines Geschwindigkeitsbegrenzungszeichens,
- Fig. 2: ein Kantenbild des Verkehrszeichens gemäß Fig. 1 und
- Fig. 3: Beispiele der Erfassung von doppelten Kreisstrukturen in Bildern, wobei die in Fig. 3a) wiedergegebenen Beispiele statische Verkehrszeichen und die in Fig. 3b) wiedergegebenen Beispiele dynamische Verkehrszeichen beispielsweise auf der Basis einer LED-Technologie betreffen.

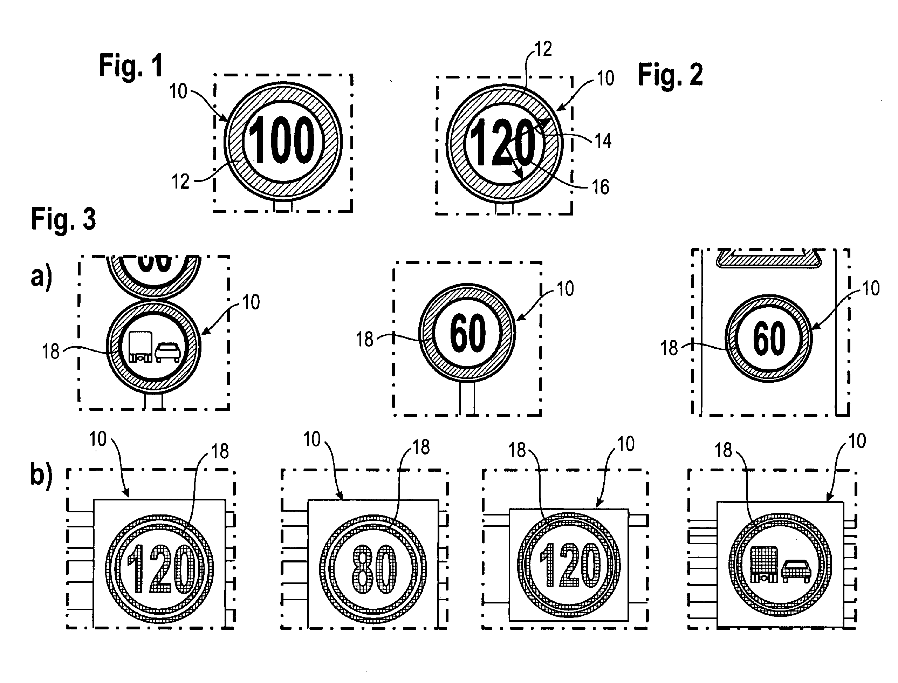

Fig. 1 zeigt ein Objekt 10, im vorliegenden Fall beispielsweise ein Geschwindigkeitsbegrenzungszeichen, mit einer eine bestimmte Dicke aufweisenden, hier z.B. kreisförmigen Umrandung 12.

Fig. 2 zeigt eine Kantenbild des Objekts 10 gemäß Fig. 1. Ein solches Kantenbild kann in einer Zwischenstufe eines Verfahrens zur Detektion des Objekts 10 entstehen.

Bei dem betreffenden Verfahren zur Detektion beispielsweise eines solchen Objektes 10 mit einer eine bestimmte Dicke aufweisenden kreisförmigen Umrandung 12 in der Umgebung im Sichtbereich eines an einem Träger wie insbesondere einem Fahrzeug angebrachten optischen Sensors werden mittels des optischen Sensors in zeitlich aufeinanderfolgenden Schritten Bilder aufgenommen. Anhand der aufgenommenen Bildfolge wird durch eine Bildverarbeitung auf der Basis einer Kantendetektion (vgl. insbesondere Fig. 2) unter Heranziehung des bekannten Verhältnisses zwischen dem Radius 14 der kreisförmigen Außenkante und dem Radius 16 der kreisförmigen Innenkante der kreisförmigen Umrandung 12 in einem integrierten Verfahrensschritt die die beiden konzentrischen Kreise umfassende doppelte Kreiskantenstruktur erfasst.

Als optischer Sensor kann insbesondere eine Graustufen-Kamera, insbesondere eine Graustufen-Videokamera, verwendet werden. Die Kantendetektion kann beispielsweise mittels eines Sobel-Operators oder dergleichen durchgeführt werden.

Zur Erfassung der doppelten Kreiskantenstruktur kann für jedes Pixel eines jeweiligen aufgenommenen Bildes ein zweifaches Annahmeschema herangezogen werden, das sowohl eine Annahme bezüglich des Radius 14 der kreisförmigen Außenkante als auch eine Annahme bezüglich des Radius 16 der kreisförmigen Innenkante der kreisförmigen Umrandung 12 umfasst, und ein diese Annahme enthaltendes Bild erzeugt werden. Zur Erfassung des Zentrums der doppelten Kreiskantenstruktur kann insbesondere auf der Basis des bekannten Verhältnisses zwischen den beiden Kreisradien 14, 16 eine Schwelle bestimmt werden.

Es ist insbesondere eine solche Vorgehensweise denkbar, bei der in einem vorangehenden Verfahrensschritt zunächst nur eine relativ gröbere Erfassung von einzelnen kreisförmigen Strukturen bei geringerer Auflösung erfolgt und anschließend unter Heranziehung der Ergebnisse des vorangehenden Verfahrensschrittes der relativ genauere integrierte Verfahrensschritt zur Erfassung der doppelten Kreiskantenstruktur mit relativ höherer Auflösung durchgeführt wird. Dabei können nach dem vorangehenden Verfahrensschritt und vor dem integrierten Verfahrensschritt zur Erfassung der doppelten Kreiskantenstruktur mittels eines Verfolgers durch Rauschen und/oder nicht zu erfassende Strukturen verursachte Artefakten oder Störungen ausgefiltert werden.

Bei der Erfassung von Objekten 10 mit unterschiedlichen bekannten Verhältnissen zwischen den Kreisradien kann unter Heranziehung der unterschiedlichen bekannten Verhältnisse zwischen unterschiedlichen Objekten 10 unterschieden werden.

Fig. 3 zeigt Beispiele der Erfassung von doppelten Kreisstrukturen in Bildern, wobei die in Fig. 3a) wiedergegebenen Beispiele statische Verkehrszeichen, die beispielsweise auf Aluminiumfolien gedruckt sind, und die in Fig. 3b) wiedergegebenen Beispiele dynamische Verkehrszeichen betreffen, die beispielsweise auf einer LED-Technologie basieren. Es handelt sich also um zwei unterschiedliche Arten von Geschwindigkeitsbegrenzungszeichen, die ausweislich der Fig. 2 zuverlässig erfasst wurden.

Die in den Fig. 3a) und 3b) wiedergegebenen beiden Arten von Objekten 10 bzw. Verkehrszeichen besitzen unterschiedliche Verhältnisse zwischen dem Außenradius und dem Innenradius der betreffenden kreisförmigen Umrandung bestimmter Dicke. So liegt im vorliegenden Fall das betreffende Verhältnis für die in der Fig. 3a) wiedergegebenen Objekte 10 bzw. statischen Zeichen bei 0,7 und für die in Fig. 3b) wiedergegebenen Objekte 10 bzw. dynamischen Zeichen bei 0,85.

Einer der wesentlichen Vorteile des ursprünglichen Ansatzes für einzelne Kreise gemäß der sogenannten "Fast Radial Symmetry Transform" besteht darin, dass die Gradientenrichtung wirksam mit herangezogen werden kann. So kann bei im Voraus bekannter Gradientenrichtung diese Gradientenrichtung effektiv zur Erfassung der interessierenden Kreisstruktur berücksichtigt werden. Im Zusammenhang mit dem erfindungsgemäßen Ansatz, wonach doppelte Kreise erfasst werden, bekommt dies noch mehr Gewicht, da der innere Kreis 18 bei den statischen Zeichen (vgl. Fig. 3a)) eine Gradientenrichtung von Hell nach Dunkel und bei den dynamischen Zeichen (vgl. Fig. 3b)) eine Gradientenrichtung von Dunkel nach Hell besitzt. Dies kann auf effiziente Art und Weise in dem verwendeten Annahmeschema-Algorithmus berücksichtigt werden.

Wie anhand der Fig. 3 zu erkennen ist, werden die doppelten Kreisstrukturen genau und robust erfasst.

Der erforderliche Rechenaufwand kann insbesondere auch dadurch noch weiter reduziert werden, dass beispielsweise zweistufig wie folgt vorgegangen wird:

In einem ersten Verfahrens- oder Bearbeitungsschritt erfolgt nur eine grobe Erfassung einzelner kreisförmiger Strukturen. Bevorzugt wird dieser Schritt für ein Bild mit einer halben Auflösung, das heißt 50 % Weite und 50 % Höhe, durchgeführt. Dieser erste Schritt stellt auf einfache Weise sicher, dass alle relevanten Strukturen aufgefunden und grob lokalisiert werden. In dem zweiten Schritt werden die Ergebnisse des ersten Schrittes als Eingangsgrößen verwendet, und an den Stellen, an denen Kreise aufgefunden wurden, wird die präzisere Doppelkreiserfassung bei voller Auflösung durchgeführt. Da die aufzusuchenden Radien während des ersten Schrittes zumindest grob geschätzt wurden, wird während des zweiten Bearbeitungs- oder Verfahrensschrittes mit einer kleineren Anzahl von Radien gesucht. Wird beispielsweise im ersten Schritt ein Kreis mit einem Radius "6" bei einer bestimmten Position im Bild erfasst, so kann der zweite Schritt zweckmäßigerweise beispielsweise mit möglichen Radien "5", "6" und "7" durchgeführt werden. Dieser zweistufige Ansatz stellt die Echtzeitfähigkeit des Erfassungsansatzes sicher und bringt zusätzlich, wie in Fig. 3 gezeigt, bezüglich der Lokalisation eine hohe Präzision mit sich. Diese hohe Präzision bezüglich der Lokalisierung und Größe der Objekte 10 trägt in hohem Maße dazu bei, dass die folgenden Bearbeitungs- oder Verfahrensschritte zuverlässiger durchgeführt werden können und das Erfassungssystem insgesamt robuster arbeitet. Der Rechenaufwand kann überdies dadurch reduziert werden, dass nach der ersten groben Erfassung mittels eines Verfolgers durch Rauschen und/oder nicht zu erfassende Strukturen verursachte Artefakte ausgefiltert werden. In diesem Fall muss die zweite Stufe nur auf Objektkandidaten angewandt werden, die zeitlich stabil sind und ein plausibles Bewegungsmuster aufweisen.

Die Erfindung ist nicht auf die Erfassung von kreisförmigen bzw. die Form eines regelmäßigen Polygons besitzenden Verkehrszeichen beschränkt. Grundsätzlich ist auch eine Anwendung bei beliebigen anderen Objekten mit einer doppelten Kreisstruktur bzw. mit einer doppelten gleichmäßigen Polygonstruktur denkbar. Hierzu zählen beispielsweise Räder von Fahrzeugen und Motorrädern oder Schilder für eine Kameraabstimmung und eine automatische Crash-Test-Analyse.

### Bezugszeichenliste

- 10: Objekt
- 12: kreisförmige Umrandung
- 14: äußerer Radius
- 16: innerer Radius
- 18: innerer Kreis

## Patentansprüche

1. Verfahren zur Detektion eines Objektes (10) mit einer eine bestimmte Dicke aufweisenden kreisförmigen oder die Form eines regelmäßigen Polygons besitzenden Umrandung (12) in der Umgebung im Sichtbereich eines an einem Träger wie insbesondere einem Fahrzeug angebrachten optischen Sensors, wobei eine jeweilige kreisförmige Umrandung eine kreisförmige Außenkante und eine kreisförmige Innenkante besitzt und eine jeweilige die Form eines regelmäßigen Polygons besitzende Umrandung eine Außenkante und eine Innenkante besitzt, die Ecken aufweisen, die unter gleichem Zentriwinkel auf einem Außenkreis bzw. Innenkreis liegen, bei dem mittels des optischen Sensors in zeitlich aufeinander folgenden Schritten Bilder aufgenommen werden und anhand der aufgenommenen Bildfolge durch eine Bildverarbeitung auf der Basis einer Kantendetektion unter Heranziehung des bekannten Verhältnisses zwischen dem Radius (14) der kreisförmigen Außenkante und dem Radius (16) der kreisförmigen Innenkante der kreisförmigen Umrandung (12) bzw. unter Heranziehung des Verhältnisses zwischen dem Radius des durch die Ecken der Außenkante verlaufenden Außenkreises und dem Radius des durch die Ecken der Innenkante verlaufenden Innenkreises in einem integrierten Verfahrensschritt die die beiden jeweiligen konzentrischen Kreise umfassende doppelte Kreiskantenstruktur erfasst wird.

2. Verfahren nach Anspruch 1,
**dadurch gekennzeichnet,**
**dass** als optischer Sensor eine Graustufen-Kamera verwendet wird.

3. Verfahren nach Anspruch 1 oder 2,
**dadurch gekennzeichnet,**
**dass** die Kantendetektion mittels eines Sobel-Operators durchgeführt wird.

4. Verfahren nach einem der vorhergehenden Ansprüche,
**dadurch gekennzeichnet,**
**dass** zur Erfassung der doppelten Kreiskantenstruktur für jedes Pixel eines jeweiligen aufgenommenen Bildes ein zweifaches Annahmeschema herangezogen wird, das sowohl eine Annahme bezüglich des Radius (14) der kreisförmigen Außenkante bzw. bezüglich des Radius des durch die Ecken der Außenkante verlaufenden Außenkreises als auch eine Annahme bezüglich des Radius (16) der kreisförmigen Innenkante der kreisförmigen Umrandung (12) bzw. bezüglich des Radius des durch die Ecken der Innenkante verlaufenden Innenkreises umfasst, und ein diese Annahmen enthaltendes Bild erzeugt wird.

5. Verfahren nach Anspruch 4,
**dadurch gekennzeichnet,**
**dass** zur Erfassung des Zentrums der doppelten Kreiskantenstruktur insbesondere auf der Basis des bekannten Verhältnisses zwischen den beiden Kreisradien (14, 16) eine Schwelle bestimmt wird.

6. Verfahren nach einem der vorhergehenden Ansprüche,
**dadurch gekennzeichnet,**
**dass** in einem vorangehenden Verfahrensschritt zunächst nur eine relativ gröbere Erfassung von einzelnen kreisförmigen bzw. die Form eines regelmäßigen Polygons besitzenden Strukturen bei geringerer Auflösung erfolgt und anschließend unter Heranziehung der Ergebnisse des vorangehenden Verfahrensschrittes der relativ genauere integrierte Verfahrensschritt zur Erfassung der doppelten Kreiskantenstruktur mit relativ höherer Auflösung durchgeführt wird.

7. Verfahren nach Anspruch 6,
**dadurch gekennzeichnet,**
**dass** nach dem vorangehenden Verfahrensschritt und vor dem integrierten Verfahrensschritt zur Erfassung der doppelten Kreiskantenstruktur mittels eines Verfolgers durch Rauschen und/oder nicht zu erfassende Strukturen verursachte Artefakte ausgefiltert werden.

8. Verfahren nach einem der vorhergehenden Ansprüche,
**dadurch gekennzeichnet,**
**dass** unter Heranziehung unterschiedlicher bekannter Verhältnisse zwischen den Kreisradien (14, 16) zwischen unterschiedlichen Objekten unterschieden wird.

9. Computerprogramm mit Programmcodemitteln zur Durchführung des Verfahrens nach einem der Ansprüche 1 bis 8, wenn das Computerprogramm auf einem Computer oder einer entsprechenden Recheneinheit ausgeführt wird.

10. Computerprogrammprodukt mit Programmcodemitteln, die auf einem computerlesbaren Datenträger gespeichert sind, zur Durchführung des Verfahrens nach einem der Ansprüche 1 bis 8, wenn das Computerprogrammprodukt auf einem Computer oder einer entsprechenden Recheneinheit ausgeführt wird.

11. Vorrichtung zur Detektion eines Objektes mit einer eine bestimmte Dicke aufweisenden kreisförmigen oder die Form eines regelmäßigen Polygons besitzenden Umrandung in der Umgebung im Sichtbereich eines an einem Träger wie insbesondere einem Fahrzeug angebrachten optischen Sensors, mit einer Datenverarbeitungsanlage, die zur Durchführung des Verfahrens nach einem der Ansprüche ausgeführt ist.

## Geänderte Patentansprüche

### Geänderte Patentansprüche gemäss Regel 137(2) EPÜ.

**1.** Verfahren zur Detektion eines Objektes (10) mit einer eine bestimmte Dicke aufweisenden kreisförmigen oder die Form eines regelmäßigen Polygons besitzenden Umrandung (12) in der Umgebung im Sichtbereich eines an einem Träger wie insbesondere einem Fahrzeug angebrachten optischen Sensors, wobei eine jeweilige kreisförmige Umrandung eine kreisförmige Außenkante und eine kreisförmige Innenkante besitzt und eine jeweilige die Form eines regelmäßigen Polygons besitzende Umrandung eine Außenkante und eine Innenkante besitzt, die Ecken aufweisen, die unter gleichem Zentriwinkel auf einem Außenkreis bzw. Innenkreis liegen, bei dem mittels des optischen Sensors in zeitlich aufeinander folgenden Schritten Bilder aufgenommen werden und im Rahmen einer Bildverarbeitung in Bezug auf die aufgenommene Bildfolge eine Kantendetektion erfolgt,
**dadurch gekennzeichnet,**
**dass** anhand der aufgenommenen Bildfolge durch eine Bildverarbeitung auf der Basis einer Kantendetektion unter Heranziehung des bekannten Verhältnisses zwischen dem Radius (14) der kreisförmigen Außenkante und dem Radius (16) der kreisförmigen Innenkante der kreisförmigen Umrandung (12) bzw. unter Heranziehung des Verhältnisses zwischen dem Radius des durch die Ecken der Außenkante verlaufenden Außenkreises und dem Radius des durch die Ecken der Innenkante verlaufenden Innenkreises in einem integrierten Verfahrensschritt die die beiden jeweiligen konzentrischen Kreise umfassende doppelte Kreiskantenstruktur erfasst wird.

**2.** Verfahren nach Anspruch 1,
**dadurch gekennzeichnet,**
**dass** als optischer Sensor eine Graustufen-Kamera verwendet wird.

**3.** Verfahren nach Anspruch 1 oder 2,
**dadurch gekennzeichnet,**
**dass** die Kantendetektion mittels eines Sobel-Operators durchgeführt wird.

**4.** Verfahren nach einem der vorhergehenden Ansprüche,
**dadurchgekennzeichnet,**
dass zur Erfassung der doppelten Kreiskantenstruktur für jedes Pixel eines jeweiligen aufgenommenen Bildes ein zweifaches Annahmeschema herangezogen wird, das sowohl eine Annahme bezüglich des Radius (14) der kreisförmigen Außenkante bzw. bezüglich des Radius des durch die Ecken der Außenkante verlaufenden Außenkreises als auch eine Annahme bezüglich des Radius (16) der kreisförmigen Innenkante der kreisförmigen Umrandung (12) bzw. bezüglich des Radius des durch die Ecken der Innenkante verlaufenden Innenkreises umfasst, und ein diese Annahmen enthaltendes Bild erzeugt wird.

**5.** Verfahren nach Anspruch 4,
**dadurch gekennzeichnet,**
**dass** zur Erfassung des Zentrums der doppelten Kreiskantenstruktur insbesondere auf der Basis des bekannten Verhältnisses zwischen den beiden Kreisradien (14, 16) eine Schwelle bestimmt wird.

**6.** Verfahren nach einem der vorhergehenden Ansprüche,
**dadurch gekennzeichnet,**
**dass** in einem vorangehenden Verfahrensschritt zunächst nur eine relativ gröbere Erfassung von einzelnen kreisförmigen bzw. die Form eines regelmäßigen Polygons besitzenden Strukturen bei geringerer Auflösung erfolgt und anschließend unter Heranziehung der Ergebnisse des vorangehenden Verfahrensschrittes der relativ genauere integrierte Verfahrensschritt zur Erfassung der doppelten Kreiskantenstruktur mit relativ höherer Auflösung durchgeführt wird.

**7.** Verfahren nach Anspruch 6,
**dadurch gekennzeichnet,**
**dass** nach dem vorangehenden Verfahrensschritt und vor dem integrierten Verfahrensschritt zur Erfassung der doppelten Kreiskantenstruktur mittels eines Verfolgers durch Rauschen und/oder nicht zu erfassende Strukturen verursachte Artefakte ausgefiltert werden.

**8.** Verfahren nach einem der vorhergehenden Ansprüche,
**dadurch gekennzeichnet,**
**dass** unter Heranziehung unterschiedlicher bekannter Verhältnisse zwischen den Kreisradien (14, 16) zwischen unterschiedlichen Objekten unterschieden wird.

**9.** Computerprogramm mit Programmcodemitteln zur Durchführung des Verfahrens nach einem der Ansprüche 1 bis 8, wenn das Computerprogramm auf einem Computer oder einer entsprechenden Recheneinheit ausgeführt wird.

**10.** Computerprogrammprodukt mit Programmcodemitteln, die auf einem computerlesbaren Datenträger gespeichert sind, zur Durchführung des Verfahrens nach einem der Ansprüche 1 bis 8, wenn das Computerprogrammprodukt auf einem Computer oder einer entsprechenden Recheneinheit ausgeführt wird.

**11.** Vorrichtung zur Detektion eines Objektes mit einer eine bestimmte Dicke aufweisenden kreisförmigen oder die Form eines regelmäßigen Polygons besitzenden Umrandung in der Umgebung im Sichtbereich eines an einem Träger wie insbesondere einem Fahrzeug angebrachten optischen Sensors, mit einer Datenverarbeitungsanlage, die zur Durchführung des Verfahrens nach einem der Ansprüche 1 bis 8 ausgeführt ist.
